# EUROPÄISCHE PATENTSCHRIFT

(11) **EP 3 206 112 B1**
(45) Veröffentlichungstag und Bekanntmachung des Hinweises auf die Patenterteilung: **13.05.2020**
(21) Anmeldenummer: 17153359.9
(22) Anmeldetag: 26.01.2017
(51) Int. Cl.: G06F 3/0362, G06F 3/0484

(54) **VERFAHREN ZUR EINSTELLUNG EINES ZAHLENWERTBEREICHS AN EINER EINGABEVORRICHTUNG**
METHOD FOR ADJUSTING A COUNTER VALUE RANGE ON AN INPUT DEVICE
PROCÉDÉ DE RÉGLAGE D'UNE ZONE DE VALEUR NUMÉRIQUE SUR UN DISPOSITIF D'ENTRÉE

(30) Priorität: 11.02.2016 DE 102016001481
(43) Veröffentlichungstag der Anmeldung: 16.08.2017
(73) Patentinhaber: Lenze Automation GmbH, 31855 Aerzen (DE)
(72) Erfinder: Götz, Olaf, 33034 Brakel (DE); Wloch, Robert, 31812 Bad Pyrmont (DE)
(74) Vertreter: Patentanwälte Ruff, Wilhelm, Beier, Dauster & Partner mbB

(56) Entgegenhaltungen:
- DE-A1-102014 010 302
- US-A1- 2010 306 694
- US-A1- 2014 282 252

## Beschreibung

### Anwendungsgebiet und Stand der Technik

Die Erfindung betrifft ein Verfahren zur Einstellung eines Zahlenwertbereichs an einer Eingabevorrichtung, um vor allem Komponenten eines elektrischen Antriebssystems zu konfigurieren oder auszuwählen hinsichtlich eines Parameters als Zahlenwert. So sollen beispielsweise aus einer großen Bandbreite an Leistungsstellern mit sehr unterschiedlichen Bemessungsleistungen als Parameter solche innerhalb eines bestimmten Bereichs der Bemessungsleistung herausgesucht und angezeigt werden können.

Eingabeverfahren sind im Stand der Technik vielfältig bekannt, beispielsweise aus der DE 10133135 A1 für Kochgeräte. Dabei wird an einem berührempfindlichen Bedienfeld mittels eines Fingers auf einem sogenannten Slider ein Zahlenwert eingestellt. Um innerhalb eines vorgegebenen großen Zahlenwertbereichs eine genaue Einstellung vornehmen zu können, ist eine sogenannte Zoom-Funktion vorgesehen. Deren Aktivierung kann durch abschnittsweises bzw. ein- oder mehrmaliges Überstreichen des Sliders mit dem Finger eingestellt werden. Dies ist aber in der Regel aufwändig.

Aus der US 2014/0282252 A1 ist ein weiteres gattungsgemäßes Eingabeverfahren bekannt. An einem Slider wird ein Zahlenwertbereich angezeigt in einer Anzeige. Dabei können Endpunkte des Sliders verstellt werden. So kann eine komfortablere Eingabevorrichtung bereitgestellt werden.

Aus der US 2010/0306694 A1 ist ein weiteres Eingabeverfahren bekannt mit einem Minimalwertschieber und einem Maximalwertschieber. Diese Schieber werden an einer Anzeige angezeigt. Der Minimalwertschieber und der Maximalwertschieber sind dabei zweiteilig derart, dass nach gemeinsamem Verschieben von zweiteiligem Minimalwertschieber und/oder zweiteiligem Maximalwertschieber der jeweils zu einem Ende des Zahlenwertbereichs als Slider hinweisende Teil stehen bleiben kann. Der nach innen gerichtete andere Teil des Minimalwertschiebers oder des Maximalwertschiebers kann dann gelöst und weiter in den Zwischenbereich verschoben werden, um einen Unter-Zahlenwertbereich zu bilden.

### Aufgabe und Lösung

Der Erfindung liegt die Aufgabe zugrunde, ein eingangs genanntes Verfahren zur Einstellung eines Zahlenwertbereichs bereitzustellen, mit dem Probleme des Standes der Technik gelöst werden können und es insbesondere möglich ist, einen Zahlenwertbereich an einer Eingabevorrichtung besser, intuitiv und praxistauglich einzustellen.

Gelöst wird diese Aufgabe durch ein Verfahren mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Bei dem Verfahren zur Einstellung eines Zahlenwertbereichs an einer Eingabevorrichtung, um Komponenten eines elektrischen Antriebssystems hinsichtlich eines Parameters als Zahlenwert zu konfigurieren oder auszuwählen, sind an einer Anzeige der Eingabevorrichtung ein Minimalwert für den Zahlenwert und mit Abstand dazu ein Maximalwert für den Zahlenwert dargestellt, die variieren können bzw. variabel sind. Der Minimalwert und der Maximalwert bilden zwischen sich einen Zahlenwertbereich, wobei innerhalb dieses Zahlenwertbereichs der genannte Parameter oder die genannten Parameter liegen können. An der Anzeige werden die Zahlenwerte für den Parameter der verschiedenen Komponenten angezeigt, die innerhalb des Zahlenwertbereiches liegen. Dabei können in diese Zahlenwerte entweder direkt zwischen Minimalwert oder Maximalwert angezeigt werden. Alternativ können sie zusammen mit den durch diese Parameter identifizierten Komponenten rechts oder allgemein daneben dargestellt werden können. Bei dem Verfahren werden die im Folgenden genannten und erläuterten Schritte durchgeführt. Es werden ein Minimalwertschieber und ein Maximalwertschieber jeweils als grafisches Element angezeigt. Der Minimalwertschieber und der Maximalwertschieber können zu Beginn des Verfahrens den Minimalwert und den Maximalwert verdeutlichen bzw. sind möglichst weit voneinander entfernt mit einem bestimmten ursprünglichen Abstand und spannen zwischen sich sozusagen den Zahlenwertbereich auf. Zur Veränderung des Zahlenwertbereichs sind die Schieber bewegbar, und zwar vorzugsweise beide. Dabei sind sie vorteilhaft aufeinander zu und voneinander weg bewegbar, so dass sowohl der Minimalwert als auch der Maximalwert verringert und vergrößert werden können. Der Minimalwertschieber wird also auf den Maximalwertschieber zu oder von diesem weg bewegt. In ähnlicher Form kann der Maximalwertschieber auf den Minimalwertschieber zu oder von diesem weg bewegt werden. Dabei wird im Falle eines Bewegens des Minimalwertschiebers weg vom Maximalwertschieber der Minimalwert verringert, falls dies überhaupt möglich ist. Vorteilhaft ist zu Beginn des Einstellverfahrens ein Verkleinern des Minimalwerts nicht möglich, da dieser vorteilhaft ursprünglich zu Null gesetzt ist. Der Minimalwert wird vergrößert im Falle eines Bewegens des Minimalwertschiebers hin zum Maximalwertschieber. So kann durch Bewegen bzw. Verschieben des Minimalwertschiebers ein neuer Minimalwert erhalten werden.

In ähnlicher Form kann der Maximalwertschieber bewegt bzw. verschoben werden. Wird er hin zum Minimalwertschieber bewegt, so wird der Maximalwert verringert. Wird der Maximalwertschieber weg vom Minimalwertschieber bewegt, so wird der Maximalwert vergrößert. Damit kann ein neuer Maximalwert eingestellt werden ausgehend von einem zu Beginn des Verfahrens ursprünglich vorgegebenen Maximalwert.

Durch Verändern des Minimalwerts und/oder des Maximalwerts auf vorbeschriebener Art und Weise kann der ursprüngliche Zahlenwertbereich verändert werden und ein neuer Zahlenwertbereich gebildet bzw. aufgespannt werden. Dabei wird dieser neue Zahlenwertbereich durch den neuen Minimalwert und/oder den neuen Maximalwert bestimmt. Deren Abstand zueinander kann zwar theoretisch gleich bleiben, vorteilhaft ist jedoch ein neuer Abstand gegeben zwischen Minimalwertschieber und Maximalwertschieber. Besonders vorteilhaft ist dieser neue Abstand etwas geringer als der ursprüngliche Abstand. Der Zahlenwertbereich wird also bei Bewegen von Minimalwertschieber oder Maximalwertschieber aufeinander zu verkleinert. Bei Bewegen von Minimalwertschieber oder Maximalwertschieber voneinander weg wird der Zahlenwertbereich vergrößert. Dies entspricht also einer Art Zoom-Funktion zur genaueren Einstellung oder zu einem besseren Auffinden von Zahlenwerten bzw. Parametern dazwischen sowie den diesen zugehörigen Komponenten. Des Weiteren kann so ein Auswahlbereich für Komponenten anhand ihrer Parameter verringert, vergrößert oder einfach verschoben werden.

Auch die Parameter von Komponenten, deren Zahlenwerte im neuen Zahlenwertbereich liegen, können angezeigt werden. Dies kann entweder direkt zwischen Minimalwertschieber und Maximalwertschieber erfolgen, alternativ, wie vorgenannt, daneben.

Vorteilhaft werden an der Anzeige auch die Komponenten angezeigt, deren Parameter in Zahlenwert innerhalb des aktuellen Zahlenwertbereichs liegen. Dabei können die Komponenten entsprechend ihrer tatsächlichen körperlichen Ausgestaltung an der Anzeige angezeigt werden, beispielsweise in einer Art Auflistung oder Reihenfolge mit Abstand zu dem Bereich der Anzeige mit Minimalwertschieber und Maximalwertschieber. So können nicht nur zwischen Minimalwertschieber und Maximalwertschieber ihre Parameter dargestellt werden, sondern auch die Komponenten selbst. Durch Auswahl einer der angezeigten Komponenten kann dann das elektrische Antriebssystem genau konfiguriert werden.

In möglicher Weiterbildung der Erfindung können die Parameter im neuen Zahlenwertbereich durch die Angabe ihres Zahlenwerts und/oder durch Darstellung eines grafischen Elements an dem dem Zahlenwert des jeweiligen Parameters entsprechenden Ort im neuen Zahlenwertbereich angezeigt werden. Als grafisches Element kann vorteilhaft ein Strich oder ein Streifen mit Verlauf quer zur Richtung zwischen Minimalwertschieber und Maximalwertschieber vorgesehen sein, beispielsweise auch mit besonderer Farbe zur besseren Erkennbarkeit. Zusätzlich kann der entsprechende Zahlenwert dieses Parameters angezeigt werden, vorteilhaft darüber oder darunter. Alternativ kann auch nur der Zahlenwert am entsprechenden Ort im neuen Zahlenwertbereich angezeigt werden.

In einer möglichen Weiterbildung der Erfindung kann an der Anzeige ein sogenannter Zahlenwertstreifen dargestellt sein, der zwischen dem Minimalwertschieber und dem Maximalwertschieber verläuft. Insbesondere verläuft ein solcher Zahlenwertstreifen zwischen dem ursprünglichen Ort von Minimalwertschieber und Maximalwertschieber. Dabei kann vorgesehen sein, dass er unverändert bleibt, während die Schieber bewegt werden. Insbesondere kann der Zahlenwertstreifen auch unverändert bleiben, wenn, was nachfolgend noch näher erläutert wird, der Minimalwertschieber und/oder der Maximalwertschieber an einem etwas anderen Ort stehen, sich ihr Abstand insbesondere verringert hat. Ein solcher Zahlenwertstreifen ist vorteilhaft als breiter Streifen ausgebildet mit einer deutlichen Umrandung, so dass er ein schmales längliches Rechteck darstellen kann. Er dient vorteilhaft auch dazu, dass an ihm die vorgenannten grafischen Elemente, Striche oder Streifen für den Zahlenwert eines Parameters besser dargestellt werden können. Des Weiteren kann der Zahlenwertstreifen optisch eine Art Schiene oder Führung bilden, um den Minimalwertschieber und den Maximalwertschieber daran bewegen bzw. verschieben zu können, so dass die Anmutung eines mechanischen Schiebereglers gegeben ist.

In Weiterbildung der Erfindung ist es möglich, dass an dem genannten Zahlenwertstreifen vorgenannte Striche oder Streifen, die dem Parameter entsprechen, dargestellt werden. Des Weiteren ist es vorteilhaft möglich, dass ein Bereich des Zahlenwertstreifens zwischen den jeweils am weitesten auseinanderliegenden Strichen oder Streifen eingefärbt ist als besondere grafische Kennzeichnung. Somit wird einer Bedienperson der Bereich angezeigt, in dem Komponenten für das elektrische Antriebssystem tatsächlich vorhanden sind, deren Parameter innerhalb des aktuellen Zahlenwertbereichs zwischen Minimalwertschieber und Maximalwertschieber bzw. den von diesen eingestellten Minimalwerten und Maximalwerten liegen. Alternativ könnte auch der gesamte Bereich des Zahlenwertstreifens zwischen Minimalwertschieber und Maximalwertschieber eingefärbt sein. Dann wäre aber ein Informationsgehalt hinsichtlich der dazwischen liegenden Parameter von Komponenten geringer.

Vorteilhaft kann das Verändern des jeweiligen Minimalwerts und/oder Maximalwerts abhängig von der Dauer erfolgen, mit der der jeweilige Schieber von seinem ursprünglichen Ort weg bewegt worden ist bzw. ausgelenkt ist, also je länger er ausgelenkt ist desto stärker verändert sich der Zahlenwert für den jeweiligen Minimalwert oder Maximalwert. Dies kann linear mit der Zeit erfolgen oder aber ansteigend bzw. mit Beschleunigung, so dass die Veränderung schneller wird mit zunehmender Dauer. So können Zahlenwerte, die sich deutlich unterscheiden, schneller erreicht werden. Alternativ kann die Geschwindigkeit der Änderung davon abhängen, wie weit der Schieber vom ursprünglichen Ort entfernt bzw. weggedrückt worden ist bzw. wie weit versucht wurde, ihn davon weg zu bewegen. Wird der Schieber nur ein kleines Stück bzw. wenige mm weg bewegt, vorteilhaft 1 mm bis 5 mm, so ist die Geschwindigkeit der Änderung klein. Wird der Schieber dagegen ein großes Stück bzw. einige mm weg bewegt, vorteilhaft 5 mm bis 15 mm, so ist die Geschwindigkeit der Änderung groß.

In möglicher Weiterbildung der Erfindung weist die Anzeige bzw. die Eingabevorrichtung einen Bildschirm auf, wobei eine Einstellung bzw. das Verändern des Zahlenwertbereichs oder das Bewegen von Minimalwertschieber und/oder Maximalwertschieber mittels eines peripheren Eingabegeräts wie Maus, Track Point oder Touchpad erfolgen kann. Damit kann jeweils das Zeigeelement auf bekannte Art und Weise am Bildschirm bewegt werden. Vorteilhaft weist das Eingabegerät auch mindestens eine Schaltvorrichtung odgl. auf, beispielsweise eine Maustaste oder eine Drückfunktion an einem Touchpad. Somit können auch Aktionen oder Bedienvorgänge auf bekannte Art und Weise ausgelöst werden.

In weiterer möglicher Ausbildung der Erfindung weist die Anzeige einen berührungsempfindlichen Bildschirm auf, auch bekannt als Touchscreen. Dann können ein Verändern des Zahlenwertbereichs bzw. das Bewegen von Minimalwertschieber und/oder Maximalwertschieber durch Auflegen eines Fingers auf den berührungsempfindlichen Bildschirm erfolgen, wie dies an sich bekannt ist. So kann ein Finger über den Minimalwertschieber oder den Maximalwertschieber aufgelegt werden. Durch anschließendes Bewegen des Schiebers auf den anderen zu oder von diesem weg können sie auf vorgenannte Art und Weise bewegt werden bzw. kann der Zahlenwertbereich vergrößert oder verkleinert werden. Das Zeigeelement kann dann vorteilhaft durch den Finger steuerbar sein, eine weitere Schaltvorrichtung odgl. braucht es nicht, wie es von derartigen berührungsempfindlichen Bildschirmen bekannt ist.

In einer Weiterbildung der Erfindung kann vorgesehen sein, dass bei Bewegen des Minimalwertschiebers und des Maximalwertschiebers, entweder durch ein vorgenanntes Zeigeelement, beispielsweise einen Mauszeiger, oder durch einen auf einen berührungsempfindlichen Bildschirm aufgelegten Finger, das Loslassen bzw. Freigeben des Schiebers genauso wie das Abheben eines Fingers bewirken, dass der in diesem Moment bestehende Zahlenwert als neuer Minimalwert oder neuer Maximalwert übernommen wird. Da bei Verändern des Minimalwerts und des Maximalwerts die entsprechenden Schieber jeweils selbst vorteilhaft grafisch bzw. optisch auf der Anzeige etwas bewegt werden, beispielsweise 0,1 mm bis 10 mm oder sogar 20 mm, um deren Veränderung in eine bestimmte Richtung anzuzeigen, also vom anderen Schieber weg oder auf diesen zu, kehren der Minimalwertschieber oder der Maximalwertschieber erfindungsgemäß nach Bewegen und Loslassen bzw. Freigeben nicht an ihren ursprünglichen Ort zurück, sondern an einen Ort kurz vor ihrem ursprünglichen Ort bzw. der Minimalwertschieber ist etwas zum Maximalwertschieber hin versetzt und der Maximalwertschieber ist entsprechend etwas zum Minimalwertschieber hin versetzt. Der Abstand des neuen Orts für die Schieber zu ihrem jeweiligen ursprünglichen Ort kann 1 % bis 20 % des ursprünglichen Abstands zwischen den Schiebern betragen. Vorteilhaft sind dies 3 % bis 8 %. Somit beträgt ein neuer Abstand zwischen Minimalwertschieber und Maximalwertschieber zwischen 60 % und 99 % des ursprünglichen Abstands zwischen ihnen, vorteilhaft zwischen 80 % und 90 %. Dies bedeutet also, dass Minimalwertschieber und/oder Maximalwertschieber etwas aufeinander zu bzw. nach innen versetzt sind, wenn der Minimalwert und/oder der Maximalwert verändert sind bzw. aufeinander zu verändert wurden sind. Damit wird diese Art der Veränderung für eine Bedienperson besser angezeigt.

In einer möglichen Weiterbildung der Erfindung mit dem vorbeschriebenen leichten Versatz von Minimalwertschieber und Maximalwertschieber nach Verändern von Minimalwert und Maximalwert kann vorgesehen sein, dass ein erneutes Vergrößern des Minimalwerts genauso funktioniert, ebenso ein Verringern des Maximalwerts. Der Abstand zwischen den beiden wird dann an ihrem jeweiligen neuen Ort nicht noch einmal verändert.

In einer Weiterbildung der Erfindung kann vorgesehen sein, dass bei dem vorbeschriebenen Versatz von Minimalwertschieber und Maximalwertschieber von ihrem ursprünglichen Ort ein Verringern des Minimalwerts nach vorherigem Vergrößern dadurch erfolgt, dass der Minimalwertschieber weg vom Maximalwertschieber bewegt wird an seinen ursprünglichen Ort. Da hierfür in der Praxis, anders für ein Bewegen des Minimalwertschiebers hin zum Maximalwertschieber, in der Regel nicht sehr viel Platz zur Verfügung stehen wird, kann vorgesehen sein, dass dies als eine Art Taster-Befehl oder sogenannter Toggle-Befehl gewertet wird. So kann ein einmaliges solches Bewegen des Minimalwertschiebers weg vom Maximalwertschieber den Minimalwert um einen vorgegebenen Anteil am aktuellen Minimalwert reduzieren. Dies können 5 % bis 50 % sein, insbesondere 10 % bis 20 %, des aktuellen Minimalwerts. Als Bezugsgröße kann anstelle des aktuellen Minimalwerts auch der Abstand zwischen Minimalwertschieber und Maximalwertschieber bzw. der davon aufgespannte Zahlenwertbereich dienen. Alternativ könnte vorgesehen sein, dass der Minimalwert auf den direkt davor eingestellten Minimalwert zurückgestellt wird.

In ähnlicher Form kann bei einer Weiterbildung der Erfindung der Maximalwert nach vorherigem Verringern wieder vergrößert werden, indem der Maximalwertschieber weg vom Minimalwertschieber an den ursprünglichen Ort des Maximalwertschiebers bewegt wird. Dieses Bewegen kann maximal weit weg vom Minimalwertschieber erfolgen. Ein einmaliges solches Bewegen des Maximalwertschiebers kann den Maximalwert um einen vorgegebenen Anteil am aktuellen Maximalwert vergrößern, alternativ um einen vorgegebenen Anteil am aufgespannten Zahlenwertbereich zwischen Minimalwert und Maximalwert. Dies können, ähnlich wie zuvor für den Minimalwert beschrieben, 5 % bis 50 % sein, insbesondere 10 % bis 20 %.

In einer alternativen Weiterbildung der Erfindung kann vorgesehen sein, dass bei einem versuchten Bewegen des Minimalwertschiebers oder des Maximalwertschiebers mittels des Zeigeelements voneinander weg der Minimalwertschieber und der Maximalwertschieber nicht über deren jeweils ursprünglichen Ort an einem Zahlenwertstreifen an der Anzeige hinaus bewegbar sind, den sie hatten als das Einstellverfahren begonnen wurde. Die Schieber schlagen also sozusagen an den Enden des Zahlenwertstreifens an bzw. können nicht nach außen über diese überstehen, bleiben also still. Bei fortgesetztem Bewegen des Zeigeelements in diese Richtung kann dann aber der Minimalwert noch weiter verringert oder der Maximalwert weiter vergrößert werden. Dabei bewegt sich das Zeigeelement vorteilhaft sichtbar an der Anzeige weiter, und dessen Bewegung verändert den Minimalwert und den Maximalwert entsprechend wie vorbeschrieben.

In einer möglichen Weiterbildung der Erfindung kann vorgesehen sein, dass neben oder in dem Minimalwertschieber bzw. neben oder in dem Maximalwertschieber der aktuelle Zahlenwert des jeweiligen Schiebers angezeigt wird. Alternativ kann der Zahlenwert angezeigt werden, dem die Position dieses Schiebers zwischen Minimalwert und Maximalwert entspricht. Dies gilt insbesondere dann, wenn Minimalwertschieber oder Maximalwertschieber aufeinander zu bewegt werden. Zusätzlich können, beispielsweise an dem vorherigen Ort des jeweiligen Schiebers, der vorherige Minimalwert oder Maximalwert angezeigt werden. So kann eine Bedienperson sowohl den vorherigen Zahlenwert als auch den gerade neu eingestellten oder den dem aktuellen Ort des Schiebers entsprechenden Zahlenwert sehen.

In einer möglichen Weiterbildung der Erfindung kann vorgesehen sein, dass neben oder in dem Minimalwertschieber oder dem Maximalwertschieber der vorherige Minimalwert oder Maximalwert angezeigt wird. Eine dem aktuellen Ort entsprechender Minimalwert oder Maximalwert kann dann an anderer Stelle angezeigt werden.

In vorteilhafter Weiterbildung der Erfindung kann für den Zahlenwertbereich vorgesehen sein, dass links der Minimalwert und rechts mit Abstand dazu der Maximalwert vorgesehen sind. Diese Erstreckung in horizontaler Richtung von links nach rechts ausgehend von dem Minimalwert entspricht dem instinktiven schnellen Verständnis einer Bedienperson. Dabei kann allgemein vorgesehen sein, dass in einem Ausgangszustand bzw. ursprünglichen Zustand der anfängliche Minimalwert bei 0 oder bei 1 liegt. Der anfängliche Maximalwert kann passend zur entsprechenden Anwendung gewählt sein.

In einer Weiterbildung der Erfindung kann vorgesehen sein, dass eine Art der Skalierung bzw. Art der Darstellung des ursprünglichen Zahlenwertbereichs auch für den neuen Zahlenwertbereich übernommen wird. So kann beispielsweise eine ursprünglich lineare Darstellung oder logarithmische Darstellung des ursprünglichen Zahlenwertbereichs auch für den neuen Zahlenwertbereich gelten. In einer anderen Weiterbildung kann vorgesehen sein, dass ein erster ursprünglich dargestellter Zahlenwertbereich sehr groß ist bzw. maximal groß ist und eine logarithmische Darstellung aufweist. Dies wird allgemein für Darstellung bzw. Auswahl von Zahlenwerten bei einer begrenzten Breite als vorteilhaft angesehen. Wird dann ein kleinerer Zahlenwertbereich eingestellt, der insbesondere kleiner als 1% bis 5% ist, so kann auf eine lineare Darstellung gewechselt werden. Diese entspricht dem natürlichen Verständnis besser, und insbesondere wenn ein vorgenannter Schieber an der Anzeige entlang des Zahlenwertbereichs bewegt werden soll, fällt einer Bedienperson das Verständnis leichter bei einer linearen Darstellung.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:

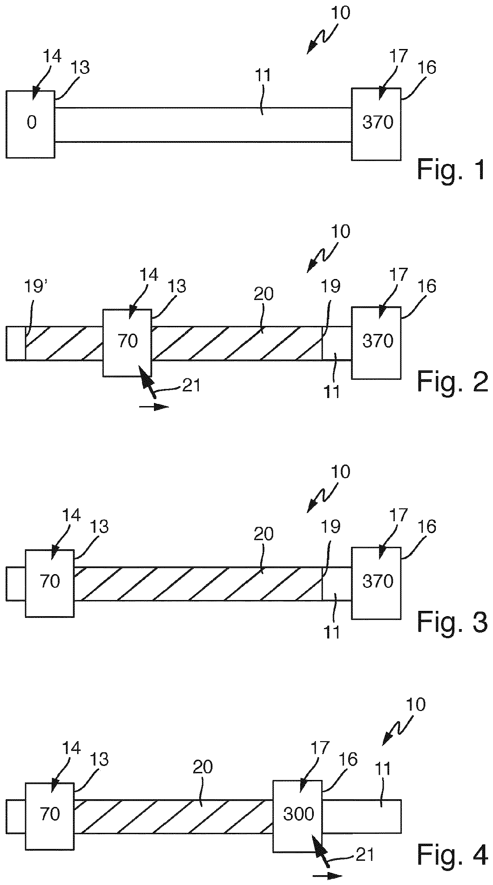

- Fig. 1 bis 8:: verschiedene Darstellungen, wie mit dem erfindungsgemäßen Verfahren an einer Eingabevorrichtung ein Zahlenwertbereich für Parameter eingestellt wird.

### Detaillierte Beschreibung der Ausführungsbeispiele

In der Fig. 1 ist als Ausschnitt in einem Bildschirm einer genannten Eingabevorrichtung, der als Anzeige 10 dient, ein Zahlenwertstreifen 11 dargestellt, beispielweise mit einer Breite von 5 cm bis 10 cm. Der Zahlenwertstreifen 11 weist ein linkes Ende und ein rechtes Ende auf. Am linken Ende ist ein Minimalwertschieber 13 dargestellt, in dem als Zahlenwert 14 der derzeitige Minimalwert, nämlich 0, angezeigt ist. In ähnlicher Form ist am rechten Ende des Zahlenwertstreifens 11 ein Maximalwertschieber 16 dargestellt mit einem Zahlenwert 17 darin, nämlich 370. Der Minimalwert 0 und der Maximalwert 370 spannen zwischen sich den Zahlenwertbereich von 0 bis 370 auf bzw. bilden diesen. Somit könnten also für Komponenten eines elektrischen Antriebssystems, beispielsweise die Leistung oder ein Leistungsbereich bzw. eine Bemessungsleistung für einen Leistungssteller eines solchen Antriebssystems, solche in einer Darstellung rechts neben dem Zahlenwertstreifen 11 angezeigt werden, deren Bemessungsleistung in diesem Bereich liegt. Da dies aber die Ausgangsdarstellung ist sind hier noch keine in diesem Zahlenwertbereich liegenden Beispiele für diese Parameter dargestellt.

Gemäß der Fig. 2 kann in einem ersten Schritt zum Verändern des Zahlenwertbereichs mit einem Zeigeelement 21 der Minimalwertschieber 13 nach rechts bzw. auf den Maximalwertschieber 16 zu bewegt werden. Dies dient offensichtlich zur Vergrößerung des Minimalwerts. In der hier dargestellten Position des Minimalwertschiebers 13 ist der entsprechende Zahlenwert 14 für den Minimalwert 70. Dies kann bei einer linearen Skalierung entlang des Zahlenwertstreifens 11 sein. Alternativ könnte diese auch logarithmisch skaliert werden, so dass bei kleineren Zahlenwerten eine bessere Einstellung möglich ist.

Wird dann durch Entfernen des Zeigeelements 21 oder Loslassen einer linken Maustaste, durch welche das Zeigeelement 21 den Minimalwertschieber 13 zur Bewegung gegriffen hat, der Minimalwertschieber 13 wieder freigegeben bzw. losgelassen, so kehrt er selbststätig in Richtung seiner Ausgangslage bzw. seines ursprünglichen Orts zurück. Wie in der Fig. 3 zu ersehen ist, beträgt dann der Abstand des Minimalwertschiebers 13 zum ganz linken Ende des Zahlenwertstreifens 11, an dem er gemäß Fig. 1 ursprünglich war, etwa 0,5 cm bzw. 5 % der gesamten Länge des Zahlenwertstreifens 11. Er ist also nicht an seinen ursprünglichen Ort zurückgekehrt. Dadurch kann eine Bedienperson erkennen, dass der Minimalwert vom ursprünglichen Minimalwert 0 vergrößert worden ist auf den aktuellen Minimalwert 70. Des Weiteren dient dies für eine verbesserte Einstellung, wie nachfolgend noch näher erläutert wird.

Nachdem nun der Zahlenwertbereich zwischen Minimalwert auf Maximalwert geändert worden ist, erscheinen, wie dies schon Fig. 2 zeigt, die Zahlenwerte bzw. zumindest der größte Zahlenwert für einen entsprechenden Parameter einer der Komponenten, die insgesamt ausgewählt werden können. Dies ist der Zahlenwert 19, der beispielsweise bei etwa 350 liegt. Es wird bis nach ganz links, also zu einem kleinsten Zahlenwert 19' für diesen Parameter, ein Bereich 20 aufgespannt. Innerhalb dieses Bereichs 20 sind nun entsprechende Komponenten oder Leistungssteller aus dem gesamten Angebot enthalten. Die jeweils einzelnen Leistungssteller sind hier nicht dargestellt, was aber auch gemacht werden könnte, wie leicht vorgestellt ist. Hierzu könnten sie ebenfalls als vertikale Striche wie für den Zahlenwert 19 dargestellt sein. Zusätzlich könnte noch neben diesen vertikalen Strichen der jeweilige Zahlenwert direkt numerisch angegeben werden.

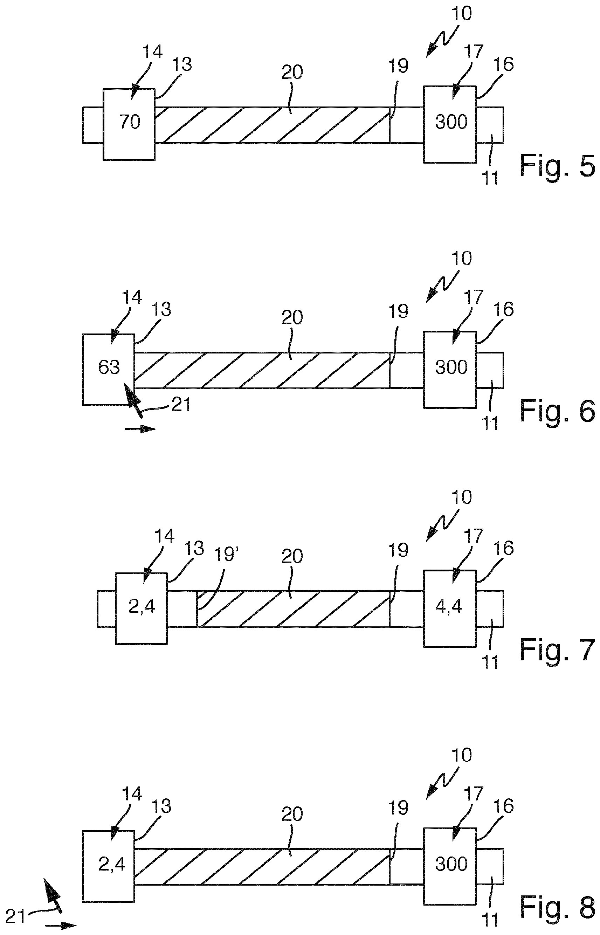

Um nun den Zahlenwertbereich noch weiter einzuengen bzw. zu verringern, kann gemäß Fig. 4 mittels des Zeigeelements 21 der Maximalwertschieber 16 gegriffen werden und nach links bzw. auf den Minimalwertschieber 13 zubewegt werden. Im Maximalwertschieber 16 wird dabei der entsprechende Zahlenwert 17 angezeigt, der hier bei 300 liegt. Dann wird der Maximalwertschieber 16 losgelassen bzw. das Zeigeelement 21 entfernt oder eine linke Maustaste wieder losgelassen, so dass der Maximalwertschieber 16 selbsttätig in Richtung seines ursprünglichen Orts zurückkehrt. Ähnlich wie zuvor für den Minimalwertschieber 13 beschrieben kehrt der Maximalwertschieber 16 aber nicht vollständig an seinen ursprünglichen Ort zurück, sondern bleibt kurz davor stehen, beispielsweise auch die vorgenannten 0,5 cm bzw. 5 % der Länge des Zahlenwertstreifens 11. Dies ist in Fig. 5 dargestellt. Nun reicht der Zahlenwertbereich von 70 als Minimalwert bis 300 als Maximalwert. Ein Zahlenwert 19 als obere Grenze des schraffiert dargestellten Bereichs 20 kann nun einen niedrigeren Wert als vorher betragen, beispielsweise 260, weil der mit dem Zahlenwert 350 offensichtlich herausgefallen ist. Dies bedeutet, dass die möglichen Leistungssteller mit einer Bemessungsleistung als Parameter entsprechend dem Zahlenwert eingeschränkt worden sind.

In Fig. 6 ist dargestellt, wie der Zahlenwertbereich wieder sozusagen erweitert werden kann bzw. konkret der Minimalwert wieder verringert werden kann. Dazu wird mittels des Zeigeelements 21 der Minimalwertschieber 13 ausgehend von der Fig. 5 gegriffen und bis nach links an das Ende des Zahlenwertstreifens 11 bzw. an seinen ursprünglichen Ort bewegt. Hier kann dann gemäß einer ersten Ausgestaltung der Erfindung vorgesehen sein, dass, anders als beim Bewegen des Minimalwertschiebers 13 nach rechts bzw. zur Vergrößerung des Minimalwerts, keine dem zurückgelegten Weg entsprechende Verringerung bzw. Veränderung des Minimalwerts erfolgt, sondern ähnlich wie bei einem Taster oder bei einem Toggle-Verfahren der Minimalwert nur mit einem einzigen Schritt verändert wird. So kann der aktuelle Minimalwert beispielsweise um 10 % verringert werden, so dass der neue Minimalwert nur noch 63 beträgt. Anstelle von 10 % könnten dies auch 5 % oder aber auch 20 % sein. Würde dann ausgehend von Fig. 6 der Minimalwertschieber 13 mittels Deaktivieren des Zeigeelements 21 wieder losgelassen werden, so würde er selbsttätig wieder in eine Stellung entsprechend Fig. 5 zurückkehren, allerdings nur noch den Minimalwert 63 anzeigen, der dann auch eingestellt wäre. Dies kann mehrfach widerholt werden, beispielsweise immer in den genannten Schritten von 10 % Verringerung, bis ein neuer gewünschter Minimalwert eingestellt ist.

Alternativ könnte gemäß einer zweiten Ausgestaltung der Erfindung vorgesehen sein, dass nicht um einen prozentualen Anteil verringert wird, sondern um fest vorgegebene Werte, die unter Umständen von einer Größeneinteilung des Minimalwerts abhängen. So könnte bei Minimalwerten bis zu 10 eine Verringerung jeweils in 1er-Schritten oder 2er-Schritten erfolgen, und bei einem Minimalwert zwischen 10 und 50 in 5er-Schritten oder 10er-Schritten. Entsprechendes kann dann auch für das Verändern des Maximalwerts 17 mit dem Maximalwertschieber 16 gelten, der genau auf entsprechende Art und Weise nach rechts auf seinen ursprünglichen Ort entsprechend Fig. 1 bewegt werden kann, um den Maximalwert 17 wieder zu vergrößern.

In der Fig. 7 ist dargestellt, wie durch starke Verringerung der Minimalwert 14 auf 2,4 gesetzt ist und der Maximalwert 17 auf 4,4. Minimalwertschieber 13 und Maximalwertschieber 16 weisen etwa 0,5 cm Abstand zu den äußersten Enden des Zahlenwertstreifens 11 auf. Innerhalb der Schieber sind Zahlenwerte 19 und 19' für Parameter für die Bemessungsleistung eines Leistungsstellers dargestellt, die zwischen sich einen schraffierten Bereich 20 bilden.

Als nochmals weitere alternative dritte Ausgestaltung der Erfindung ist in der Fig. 8 dargestellt, wie ausgehend von den Fig. 5 und 6 mittels des Zeigeelements 21 der Minimalwert 14 deutlich reduziert werden könnte. Dazu ist das Zeigeelement 21 zuerst auf den Minimalwertschieber 13 entsprechend Fig. 5 gesetzt worden und dieser nach links bewegt worden in eine Position entsprechend Fig. 6. Dadurch hat sich der Minimalwert um 10 % auf den Wert von 63 verringert. Wird dann das Zeigeelement 21 aber noch deutlich weiter nach links bewegt, und zwar von dem an seinen Anschlag gegangenen Minimalwertscheiber 13 weg, so verringert sich bei dieser Ausgestaltung der Zahlenwert 14 für den Minimalwert deutlich bzw. weiterhin und zwar entsprechend der Entfernung bzw. des Wegs des Zeigeelements 21 vom Ort, an der Minimalwertschieber 13 seinen Anschlag nach links gefunden hat bzw. nicht mehr weiter bewegt werden konnte. So kann durch Bewegen des Zeigeelements 21 nach links oder nach rechts der Minimalwert, wie sichtbar dargestellt ist, verändert werden, ohne das es notwendig ist, dass die Darstellung des Minimalwertschiebers 13 diesen noch weiter nach links schiebt. So kann mit einer einzigen Bewegung ausgehend von der Fig. 5 mit dem Minimalwert 70 der in Fig. 8 dargestellte Minimalwert von 2,4 eingestellt werden. Hier kann nämlich auch, ähnlich wie vorbeschrieben, vorgesehen sein, dass bei geringen Werten für den Minimalwert eine Verringerung nicht mehr in 10er-Schritten oder 5er-Schritten erfolgt, sondern in 1er-Schritten oder sogar in 0,1er-Schritten. Auch bei der Darstellung der Fig. 8 würde nach dem Deaktivieren bzw. Loslassen des Zeigeelements 21 der Minimalwertschieber 13 an den in Fig. 7 dargestellten Ort zurückkehren, also mit etwas Abstand zum linken Ende des Zahlenwertstreifens 11.

Entsprechendes kann, wie leicht vorstellbar ist, auch für den Maximalwertschieber 16 bzw. eine Einstellung des Maximalwerts 17 gelten.

Allgemein kann bei der Erfindung vorgesehen sein, dass eine Schrittfolge der Zahlenwerte bei den Schiebern von ihrer absoluten Größe abhängig sein kann. Wird in den Fig. 1 bis 6 der Maximalwertschieber 16 mit einem Maximalwert zwischen 300 und 370 bewegt, so kann eine grobe Schrittfolge in 10er-Schritten oder sogar 50er-Schritten sinnvoll sein. Wird entsprechend diese Figuren beim Minimalwertschieber 13 der Minimalwert in einem Bereich zwischen 63 und 70 eingestellt, so können 5er-Schritte sinnvoll sein. Bei den in Fig. 7 dargestellten Zahlenwerten 14 bzw. 17 für den Minimalwert und den Maximalwert können 0,5er-Schritte oder, beispielsweise bei unter 5 als Zahlenwert, sogar 0,1er-Schritte sinnvoll sein. Dabei können als Bezug der jeweilige Minimalwert oder Maximalwert herangezogen werden, alternativ der kleinste Zahlenwert 19' bzw. der größte Zahlenwert 19 für die vorhandenen Parameter von den Komponenten.

## Patentansprüche

1. Verfahren zur Einstellung eines Zahlenwertbereichs an einer Eingabevorrichtung zur Konfiguration oder Auswahl der Komponenten eines elektrischen Antriebssystems hinsichtlich eines Parameters als Zahlenwert, wobei die Eingabevorrichtung eine Anzeige (10) aufweist, auf der ein Zahlenwertstreifen (11) angezeigt wird an dem variabel ein Minimalwert (14) für den Zahlenwert und ein Maximalwert (17) für den Zahlenwert dargestellt sind und der Minimalwert (14) und der Maximalwert (17) zwischen sich einen Zahlenwertbereich bilden, mit folgenden Schritten:
- es wird ein Minimalwertschieber (13) als grafisches Element angezeigt und es wird mit Abstand dazu ein Maximalwertschieber (16) als grafisches Element angezeigt, die jeweils zur Veränderung des Zahlenwertbereichs bewegbar sind,
- Bewegen des Minimalwertschiebers (13) auf den Maximalwertschieber (16) zu oder von diesem weg und/oder Bewegen des Maximalwertschiebers (16) auf den Minimalwertschieber (13) zu oder von diesem weg,
- Verringern des Minimalwerts (14) im Falle eines Bewegens des Minimalwertschiebers (13) weg vom Maximalwertschieber (16) und Vergrößern des Minimalwerts (14) im Falle eines Bewegens des Minimalschiebers (13) hin zum Maximalwertschieber (16) um einen neuen Minimalwert (14) zu erhalten,
- Verringern des Maximalwerts (17) im Falle eines Bewegens des Maximalwertschiebers (16) hin zum Minimalschieber (13) und Vergrößern des Maximalwerts (17) im Falle eines Bewegens des Maximalwertschiebers (16) weg vom Minimalwertschieber (13) um einen neuen Maximalwert (17) zu erhalten,
- Verändern des Zahlenwertbereichs durch Aufspannen eines neuen Zahlenwertbereichs mit dem neuen Minimalwert (14) und/oder dem neuen Maximalwert (17),
wobei bei Bewegen von Minimalwertschieber (13) oder Maximalwertschieber (16) aufeinander zu der Zahlenwertbereich verkleinert wird, und wobei bei Bewegen von Minimalwertschieber (13) oder Maximalwertschieber (16) voneinander weg der Zahlenwertbereich vergrößert wird,
**dadurch gekennzeichnet, dass**
der Minimalwertschieber (13) oder der Maximalwertschieber (16) nach Bewegen und Loslassen bzw. Freigabe an einen neuen Ort auf dem Zahlenwertstreifen (11) bis kurz vor ihren ursprünglichen Ort
zurückkehren, so dass der neue Abstand zwischen den Schiebern (13, 16) zwischen 60% und 99% des ursprünglichen Abstands zwischen den Schiebern (13, 16) beträgt.

2. Verfahren nach Anspruch 1, **dadurch gekennzeichnet, dass** die Komponenten angezeigt werden, deren Parameter innerhalb des Zahlenwertbereichs liegen, wobei vorzugsweise diese Komponenten an der Anzeige (10) mit Abstand neben Minimalwert und Maximalwert angezeigt werden.

3. Verfahren nach Anspruch 1 oder 2, **dadurch gekennzeichnet, dass** der oder die Parameter im neuen Zahlenwertbereich durch die Angabe des Zahlenwerts und/oder durch Darstellung eines grafischen Elements (19, 19') an dem dem Zahlenwert des Parameters entsprechenden Ort im neuen Zahlenwertbereich angezeigt werden, vorzugsweise als Strich (19, 19') oder als Streifen mit Verlauf quer zur Richtung zwischen Minimalwertschieber (13) und Maximalwertschieber (16).

4. Verfahren nach einem der vorhergehenden Ansprüche, **dadurch gekennzeichnet, dass** an der Anzeige (10) der Zahlenwertstreifen (11) dargestellt ist zwischen dem Minimalwertschieber (13) und dem Maximalwertschieber (16), vorzugsweise zwischen dem ursprünglichen Ort des Minimalwertschiebers (13) und dem ursprünglichen Ort des Maximalwertschiebers (16), wobei insbesondere der Zahlenwertstreifen (11) unverändert bleibt während der Bewegung der Schieber (13, 16).

5. Verfahren nach Anspruch 4, **dadurch gekennzeichnet, dass** an bzw. quer über dem Zahlenwertstreifen (11) ein Strich (19, 19') oder Streifen gemäß Anspruch 3 dargestellt wird, wobei vorzugsweise ein Bereich (20) des Zahlenwertstreifens (11) zwischen den jeweils am weitesten auseinanderliegenden Strichen (19, 19') oder Streifen eingefärbt ist.

6. Verfahren nach einem der vorhergehenden Ansprüche, **dadurch gekennzeichnet, dass** die Anzeige (10) einen Bildschirm aufweist und das Verändern des Zahlenwertbereichs bzw. das Bewegen von Minimalwertschieber (13) und/oder von Maximalwertschieber (16) mittels eines peripheren Eingabegeräts wie einer Maus, einem Track Point oder einem Touchpad erfolgt, mit denen jeweils ein Zeigeelement (21) steuerbar ist.

7. Verfahren nach einem der vorhergehenden Ansprüche, **dadurch gekennzeichnet, dass** nach Bewegen von Minimalwertschieber (13) oder Maximalwertschieber (16) deren Loslassen bzw. Freigabe bewirkt, dass der in diesem Moment bestehende Zahlenwert (14, 17) als neuer Minimalwert (14) oder neuer Maximalwert (17) übernommen wird.

8. Verfahren nach einem der vorhergehenden Ansprüche, **dadurch gekennzeichnet, dass** der Minimalwertschieber (13) oder der Maximalwertschieber (16) nach Bewegen und Loslassen bzw. Freigabe an einen neuen Ort bis 1% bis 20% des ursprünglichen Zahlenwertbereichs, insbesondere 3% bis 8%, vor ihren ursprünglichen Ort zurücckehren, so dass der neue Abstand zwischen den Schiebern (13, 16) zwischen 60% und 99% des ursprünglichen Abstands zwischen den Schiebern (13, 16) beträgt.

9. Verfahren nach einem der vorhergehenden Ansprüche, **dadurch gekennzeichnet, dass** ein Verringern des Minimalwerts (14) nach vorherigem Vergrößern erfolgt durch Bewegen des Minimalwertschiebers (13) weg vom Maximalwertschieber (16) an den ursprünglichen Ort des Minimalwertschiebers (13), wobei ein einmaliges solches Bewegen den Minimalwert um einen vorgegebenen Anteil am aktuellen Minimalwert verringert, vorzugsweise um 5% bis 50%, insbesondere 10% bis 20%, des aktuellen Minimalwerts.

10. Verfahren nach einem der vorhergehenden Ansprüche, **dadurch gekennzeichnet, dass** ein Vergrößern des Maximalwerts (17) nach vorherigem Verringern erfolgt durch Bewegen des Maximalwertschiebers (16) weg vom Minimalwertschieber (13) an den ursprünglichen Ort des Maximalwertschiebers (16), wobei ein einmaliges solches Bewegen den Maximalwert um einen vorgegebenen Anteil am aktuellen Maximalwert vergrößert, vorzugsweise um 5% bis 50%, insbesondere 10% bis 20%, des aktuellen Maximalwerts.

11. Verfahren nach einem der vorhergehenden Ansprüche, **dadurch gekennzeichnet, dass** bei einem versuchten Bewegen des Minimalwertschiebers (13) oder des Maximalwertschiebers (16) mittels des Zeigeelements (21) voneinander weg der Minimalwertschieber (13) und der Maximalwertschieber (16) nicht über deren jeweils ursprünglichen Ort am Zahlenwertstreifen an der Anzeige (10) hinaus bewegbar sind, wobei bei weiterer Bewegung des Zeigeelements (21) in diese Richtung des Bewegens der Minimalwert (14) verringert oder der Maximalwert (17) weiter vergrößert wird.

12. Verfahren nach einem der vorhergehenden Ansprüche, **dadurch gekennzeichnet, dass** neben oder in dem Minimalwertschieber (13) oder dem Maximalwertschieber (16) der aktuelle Zahlenwert (20) dieses Schiebers angezeigt wird oder der Zahlenwert (20) angezeigt wird, dem die Position dieses Schiebers (13, 16) zwischen Minimalwert (14) und Maximalwert (17) entspricht, oder der vorherige Minimalwert (14) oder Maximalwert (17) angezeigt wird.

13. Verfahren nach einem der vorhergehenden Ansprüche, **dadurch gekennzeichnet, dass** links der Minimalwert (14) und mit Abstand dazu rechts der Maximalwert (17) dargestellt sind als Zahlenwertbereich, wobei vorzugsweise zu Beginn des Verfahrens der Minimalwertschieber (13) bis an den Minimalwert (14) gefahren ist und der Maximalwertschieber (13) bis an den Maximalwert (17) gefahren ist.

14. Verfahren nach einem der vorhergehenden Ansprüche, **dadurch gekennzeichnet, dass** eine Art der Skalierung bzw. Art der Darstellung des ursprünglichen Zahlenwertbereichs für den neuen Zahlenwertbereich übernommen wird, insbesondere ausgewählt aus der Gruppe: lineare Darstellung, logarithmische Darstellung.

## Claims

1. Method for adjusting a range of numerical values at an input device for configuration or selection of components of an electrical drive system with regard to a parameter as numerical value, wherein the input device has a display (10) on which a strip of numerical values (11) is displayed, on which strip a minimum value (14) for the numerical value and a maximum value (17) for the numerical value are displayed variably, the minimum value (14) and the maximum value (17) form between themselves a range of numerical values, the method comprising the steps of:
- displaying a minimum-value slider (13) as graphical element and displaying a maximum-value slider (16) as graphical element with a distance therefrom, which graphical elements are movable in each case for changing the range of numerical values,
- moving the minimum-value slider (13) toward the maximum-value slider (16) or away from it and/or moving the maximum-value slider (16) toward the minimum-value slider (13) or away from it,
- reducing the minimum value (14) in the case of moving the minimum-value slider (13) away from the maximum-value slider (16) and enlarging the minimum value (14) in the case of moving the minimum-value slider (13) toward the maximum-value slider (16) in order to obtain a new minimum value (14),
- reducing the maximum value (17) in the case of moving the maximum-value slider (16) toward the minimum-value slider (13) and enlarging the maximum value (17) in the case of moving the maximum-value slider (16) away from the minimum-value slider (13) in order to obtain a new maximum value (17),
- changing the range of numerical values by spanning a new range of numerical values with the new minimum value (14) and/or the new maximum value (17),
wherein, when moving the minimum-value slider (13) or the maximum-value slider (16) toward one another, the range of numerical values is reduced and wherein, when moving the minimum-value slider (13) or the maximum-value slider (16) away from one another, the range of numerical values is enlarged,
**characterized in that**
the minimum-value slider (13) or the maximum-value slider (16) return to a new location on the strip of numerical values (11) up to shortly before their original location after being moved and released so that the new spacing between the sliders (13, 16) is between 60 % and 99 % of an original spacing between the sliders (13, 16).

2. Method according to claim 1, **characterized in that** displayed are the components whose parameters lie within the range of numerical values, wherein preferably said components are displayed in the display (10) with spacing next to the minimum value and the maximum value.

3. Method according to claim 1 or 2, **characterized in that** the parameter or parameters in the new range of numerical values are displayed by specifying the numerical value and/or by representing a graphical element (19, 19') at a location in the new range of numerical values which corresponds to the numerical value of the parameter, preferably as a dash (19, 19') or as a strip with a course transversely to a direction between the minimum-value slider (13) and the maximum-value slider (16).

4. Method according to any of the preceding claims, **characterized in that** on the display (10) the strip of numerical values (11) is shown between the minimum-value slider (13) and the maximum-value slider (16), preferably between the original location of the minimum-value slider (13) and the original location of the maximum-value slider (16), wherein in particular the strip of numerical values (11) remains unchanged during movement of the sliders (13, 16).

5. Method according to claim 4, **characterized in that** on or transversely over the strip of numerical values (11) a dash (19, 19') or a strip according to claim 3 is illustrated, wherein preferably a region (20) of the strip of numerical values (11) between the in each case farthermost dashes (19, 19') or strips is colored.

6. Method according to any of the preceding claims, **characterized in that** the display (10) has a screen and changing of the range of numerical values or moving the minimum-value slider (13) and/or the maximum-value slider (16) is carried out by use of a peripheral input device like a mouse, a track point or a touchpad, by which, in each case, a pointing element (21) is controllable.

7. Method according to any of the preceding claims, **characterized in that** after moving the minimum-value slider (13) or the maximum-value slider (16), their release has the effect that the numerical value (14, 17) existing at this instant is accepted as a new minimum value (14) or new maximum value (17).

8. Method according to any of the preceding claims, **characterized in that** the minimum-value slider (13) or the maximum-value slider (16), after moving and releasing, return to a new location up to 1 % to 20 % of the original range of numerical values, in particular 3 % to 8 %, before their original location such that the new spacing between the sliders (13, 16) is between 60 % and 99 % of an original spacing between the sliders (13, 16).

9. Method according to any of the preceding claims, **characterized in that** a reduction of the minimum value (14) occurs after previous enlargement by moving the minimum-value slider (13) away from the maximum-value slider (16) to the original location of the minimum-value slider (13), wherein a single such moving reduces the minimum value by a predetermined proportion of the current minimum value, preferably by 5 % to 50 %, in particular 10 % to 20 %, of the current minimum value.

10. Method according to any of the preceding claims, **characterized in that** an enlarging of the maximum value (17) occurs after previous reduction by moving the maximum-value slider (16) away from the minimum-value slider (13) to the original location of the maximum-value slider (16), wherein a single such moving enlarges the maximum value by a predetermined proportion of the current maximum value, preferably by 5 % to 50 %, in particular 10 % to 20 %, of the current maximum value.

11. Method according to any of the preceding claims, **characterized in that** in the case of an attempted moving of the minimum-value slider (13) or the maximum-value slider (16) by a pointing element (21) away from one another, the minimum-value slider (13) and the maximum-value slider (16) cannot be moved out beyond their, in each case, original location on the strip of numerical values on the display (10), wherein with further movement of the pointing element (21) in this direction of moving, the minimum value (14) is reduced or the maximum value (17) is further enlarged.

12. Method according to any of the preceding claims, **characterized in that** next to or in the minimum-value slider (13) or the maximum-value slider (16) the current numerical value (20) of this slider is displayed or the numerical value (20) is displayed to which the position of this slider (13, 16) between the minimum value (14) and the maximum value (17) corresponds, or the previous minimum value (14) or maximum value (17) is indicated.

13. Method according to any of the preceding claims, **characterized in that**, on the left, the minimum value (14) and spaced apart from it, on the right, the maximum value (17) are shown as a range of numerical values, wherein preferably at the beginning of the method the minimum-value slider (13) is moved up to the minimum value (14) and the maximum-value slider (16) is moved up to the maximum value (17).

14. Method according to any of the preceding claims, **characterized in that** a type of scaling or type of representation of the original range of numerical values is taken over for the new range of numerical values, in particular selected from the group consisting of: a linear representation, or a logarithmic representation.

## Revendications

1. Procédé de réglage d'une plage de valeurs numériques au niveau d'un dispositif de saisie destiné à la configuration ou à la sélection des composants d'un système d'entraînement électrique du point de vue d'un paramètre en tant que valeur numérique, le dispositif de saisie possédant un afficheur (10) sur lequel est affichée une bande de valeurs numériques (11) au niveau de laquelle une valeur minimale (14) pour la valeur numérique et une valeur maximale (17) pour la valeur numérique sont représentées de manière variable et la valeur minimale (14) et la valeur maximale (17) formant entre elles une plage de valeurs numériques, comprenant les étapes suivantes :
- un curseur de valeur minimale (13) est affiché sous la forme d'un élément graphique et un curseur de valeur maximale (16) est affiché sous la forme d'un élément graphique à un certain écart de celui-ci, lesquels peuvent respectivement être déplacés en vue de modifier la plage de valeurs numériques,
- déplacement du curseur de valeur minimale (13) en approche ou en éloignement du curseur de valeur maximale (16) et/ou déplacement du curseur de valeur maximale (16) en approche ou en éloignement du curseur de valeur minimale (13),
- réduction de la valeur minimale (14) dans le cas d'un déplacement du curseur de valeur minimale (13) en éloignement du curseur de valeur maximale (16) et augmentation de la valeur minimale (14) dans le cas d'un déplacement du curseur de valeur minimale (13) en approche du curseur de valeur maximale (16) en vue d'obtenir une nouvelle valeur minimale (14),
- réduction de la valeur maximale (17) dans le cas d'un déplacement du curseur de valeur maximale (16) en approche du curseur de valeur minimale (13) et augmentation de la valeur maximale (17) dans le cas d'un déplacement du curseur de valeur maximale (16) en éloignement du curseur de valeur minimale (13) en vue d'obtenir une nouvelle valeur maximale (17),
- modification de la plage de valeurs numériques en couvrant une nouvelle plage de valeurs numériques avec la nouvelle valeur minimale (14) et/ou la nouvelle valeur maximale (17),
la plage de valeurs numériques étant réduite lors d'un déplacement du curseur de valeur minimale (13) ou du curseur de valeur maximale (16) en approche l'un de l'autre et la plage de valeurs numériques étant agrandie lors d'un déplacement du curseur de valeur minimale (13) ou du curseur de valeur maximale (16) en éloignement l'un de l'autre,
**caractérisé en ce que**
le curseur de valeur minimale (13) ou le curseur de valeur maximale (16), après un déplacement et un relâchement ou une libération à un nouvel emplacement sur la bande de valeurs numériques (11) reviennent à courte distance devant leur emplacement originel, de sorte que le nouvel écart entre les curseurs (13, 16) est compris entre 60 % et 99 % de l'écart originel entre les curseurs (13, 16).

2. Procédé selon la revendication 1, **caractérisé en ce que** les composants affichés sont ceux dont les paramètres se situent à l'intérieur de la plage de valeurs numériques, ces composants étant de préférence affichés au niveau de l'afficheur (10) avec un certain écart à côté de la valeur minimale et de la valeur maximale.

3. Procédé selon la revendication 1 ou 2, **caractérisé en ce que** le ou les paramètres dans la nouvelle plage de valeurs numériques sont affichés par l'indication de la valeur numérique et/ou par la représentation d'un élément graphique (19, 19') au niveau de l'emplacement correspondant à la valeur numérique du paramètre dans la nouvelle plage de valeurs numériques, de préférence sous la forme d'un trait (19, 19') ou sous la forme de bandes ayant un tracé transversal par rapport à la direction entre le curseur de valeur minimale (13) et le curseur de valeur maximale (16).

4. Procédé selon l'une des revendications précédentes, **caractérisé en ce que** la bande de valeurs numériques (11) est représentée au niveau de l'afficheur (10) entre le curseur de valeur minimale (13) et le curseur de valeur maximale (16), de préférence entre l'emplacement originel du curseur de valeur minimale (13) et l'emplacement originel du curseur de valeur maximale (16), la bande de valeurs numériques (11) restant notamment inchangée pendant le mouvement des curseurs (13, 16).

5. Procédé selon la revendication 4, **caractérisé en ce qu'**un trait (19, 19') ou une bande est représenté au niveau de la bande de valeurs numériques (11) ou transversalement à celle-ci selon la revendication 3, une zone (20) de la bande de valeurs numériques (11) entre les traits (19, 19') ou les bandes respectivement les plus espacés étant de préférence colorée.

6. Procédé selon l'une des revendications précédentes, **caractérisé en ce que** l'afficheur (10) possède un écran et la modification de la plage de valeurs numériques ou le déplacement du curseur de valeur minimale (13) et/ou du curseur de valeur maximale (16) s'effectue au moyen d'un appareil de saisie périphérique tel qu'une souris, un bouton de pointage ou un pavé tactile à l'aide duquel peut respectivement être commandé un élément de pointage (21).

7. Procédé selon l'une des revendications précédentes, **caractérisé en ce qu'**après le déplacement du curseur de valeur minimale (13) ou du curseur de valeur maximale (16), leur relâchement ou leur libération a pour effet que la valeur numérique (14, 17) existante à cet instant est adoptée en tant que nouvelle valeur minimale (14) ou nouvelle valeur maximale (17).

8. Procédé selon l'une des revendications précédentes, **caractérisé en ce que** le curseur de valeur minimale (13) ou le curseur de valeur maximale (16), après le déplacement et le relâchement ou la libération à un nouvel emplacement jusqu'à 1 % à 20 % de la plage de valeurs numériques originelle, notamment de 3 % à 8 %, reviennent devant leur emplacement originel, de sorte que le nouvel écart entre les curseurs (13, 16) est compris entre 60 % et 99 % de l'écart originel entre les curseurs (13, 16).

9. Procédé selon l'une des revendications précédentes, **caractérisé en ce qu'**une réduction de la valeur minimale (14) après une augmentation précédente s'effectue par un déplacement du curseur de valeur minimale (13) en éloignement du curseur de valeur maximale (16) au niveau de l'emplacement originel du curseur de valeur minimale (13), un tel mouvement unique réduisant la valeur minimale d'une part prédéfinie de la valeur minimale actuelle, de préférence de 5 % à 50 %, notamment de 10 % à 20 % de la valeur minimale actuelle.

10. Procédé selon l'une des revendications précédentes, **caractérisé en ce qu'**une augmentation de la valeur maximale (17) après une réduction précédente s'effectue par un déplacement du curseur de valeur maximale (16) en éloignement du curseur de valeur minimale (13) au niveau de l'emplacement originel du curseur de valeur maximale (16), un tel mouvement unique augmentant la valeur maximale d'une part prédéfinie de la valeur maximale actuelle, de préférence de 5 % à 50 %, notamment de 10 % à 20 % de la valeur maximale actuelle.

11. Procédé selon l'une des revendications précédentes, **caractérisé en ce que** lors d'une tentative de déplacement du curseur de valeur minimale (13) ou du curseur de valeur maximale (16) en éloignement l'un de l'autre au moyen de l'élément de pointage (21), le curseur de valeur minimale (13) et le curseur de valeur maximale (16) ne peuvent pas être déplacés au-delà de leur emplacement originel respectif au niveau de la bande de valeurs numériques sur l'afficheur (10), la valeur minimale (14) étant réduit ou la valeur maximale (17) augmenté davantage lors d'un déplacement supplémentaire de l'élément de pointage (21) dans cette direction de déplacement.

12. Procédé selon l'une des revendications précédentes, **caractérisé en ce que** la valeur numérique (20) actuelle du curseur de valeur minimale (13) ou du curseur de valeur maximale (16) est affichée à côté ou dans ce curseur, ou est affichée la valeur numérique (20) à laquelle correspond la position de ce curseur (13, 16) entre la valeur minimale (14) et la valeur maximale (17), ou alors la valeur minimale (14) ou la valeur maximale (17) précédente est affichée.

13. Procédé selon l'une des revendications précédentes, **caractérisé en ce que** la valeur minimale (14) est affichée à gauche et, à une certaine distance de celle-ci, la valeur maximale (17) est affichée à droite sous la forme d'une plage de valeurs numériques, au début du procédé le curseur de valeur minimale (13) étant de préférence amené jusqu'à la valeur minimale (14) et le curseur de valeur maximale (16) jusqu'à la valeur maximale (17).

14. Procédé selon l'une des revendications précédentes, **caractérisé en ce qu'**un mode de mise à l'échelle ou un mode de représentation de la plage de valeurs numériques originelle est adopté pour la nouvelle plage de valeurs numériques, notamment sélectionné du groupe : représentation linéaire, représentation logarithmique.
